**Europäisches Patentamt**

**European Patent Office**

**Office européen des brevets**

(11) Numéro de publication: **0 186 605**
**A2**

(12) **DEMANDE DE BREVET EUROPEEN**

(21) Numéro de dépôt: **85440075.1**

(22) Date de dépôt: **20.12.85**

(51) Int. Cl.⁴: **H 04 M 3/22**

(30) Priorité: **21.12.84 FR 8419858**

(43) Date de publication de la demande:
**02.07.86 Bulletin 86/27**

(84) Etats contractants désignés:
**AT BE CH DE GB IT LI LU NL SE**

(71) Demandeur: **CLEMESSY Société Anonyme**
**18, rue de Thann**
**F-68200 Mulhouse(FR)**

(72) Inventeur: **Jaillet, Geneviève**
**7, rue Christian Pfister**
**F-68200 Mulhouse(FR)**

(74) Mandataire: **Metz, Paul**
**Cabinet METZ PATNI 95, rue de la Ganzau**
**F-67100 Strasbourg(FR)**

(54) Simulateur de trafic circuit pour le contrôle des centraux téléphoniques analogiques ou numériques.

(57) Simulateur de trafic circuit pour centraux téléphoniques.

Simulateur caractérisé en ce qu'il comprend une unité centrale UC reliée par un bus unique (18) à deux générateurs-détecteurs GDI et GDF respectivement d'impulsions, d'impédances et de fréquences en liaison avec des organes périphériques d'affichage, de contrôle, de transmission et de communication.

Cette invention intéresse les constructeurs et utilisateurs de matériel téléphonique.

FIG. 1

EP 0 186 605 A2

0186605

L'invention se rapporte à un simulateur de trafic téléphonique pour la mise en route, le contrôle et la maintenance des centraux téléphoniques.

Il existe déjà des appareils de contrôle des centraux téléphoniques employés couramment actuellement. Ces appareils, d'une conception ancienne, n'offrent que des possibilités limitées et un usage peu commode en raison de leur structure complexe et peu adaptée à l'application réelle .

Ces appareils se composent en effet de plusieurs coffrets à raccorder entre eux pour pratiquer les mesures et les contrôles nécessaires. Un coffret est branché sur le circuit arrivée, l'autre sur le circuit départ et un troisième coffret assure les fonctions de génération et de détection des fréquences et des signaux de ligne. Dans ces appareils, les contrôles s'effectuent de façon sommaire.

Plus précisément, les simulateurs existants présentent une structure intérieure à maquettes de substitution de chaîne départ et de chaîne arrivée et d'autres modèles de circuits à logique cablée et relais.

La présente invention a pour but de simplifier grandement les circuits et de rendre notablement plus aisé l'usage de tels appareils. Elle a également pour objectif d'augmenter les possibilités techniques en ce qui concerne l'automation et le nombre de signalisations traitées.

La structure et la conception des circuits et la réalisation des fonctions permettent l'adaptation aux différents types de centraux téléphoniques.

Par ailleurs, les moyens employés donnent l'assurance d'une meilleure fiabilité.

A cet effet, l'invention se rapporte à un simulateur de trafic téléphonique pour la mise en route et le contrôle du fonctionnement des centraux téléphoniques automatiques, caractérisé en ce qu'il se compose d'une unité centrale reliée par un seul bus à un générateur-détecteur d'impulsions, d'impédances et de polarités et à un générateur-détecteur de fréquences en liaison avec plusieurs circuits d'affichage et de communication pour la réalisation des nombreuses fonctions et vérifications possibles en gardant pour l'opérateur des conditions d'utilisation d'une grande simplicité pour le contrôle et la mise en route des centraux téléphoniques analogiques mais aussi numériques.

Aux nombreux avantages indiqués de façon générale ci-dessus, il convient d'ajouter ceux ci-après:

. augmentation du nombre de types de signalisations traités ;

. existence d'une interface avec un système numérique ;

. possibilités de travailler aux conditions limites ;

. affichage en clair des signaux émis ou reçus ;

. appareil d'encombrement réduit léger et portable ;

. possibilité de tests multiples et de procédures semi-automatiques ;

. programme évolutif et extensible à d'autres signalisations;

. exploitation en mode conversationnel.

Les caractéristiques techniques et d'autres avantages du simulateur de trafic selon l'invention sont consignés dans la description ci-après en référence au dessin annexé dans lequel :

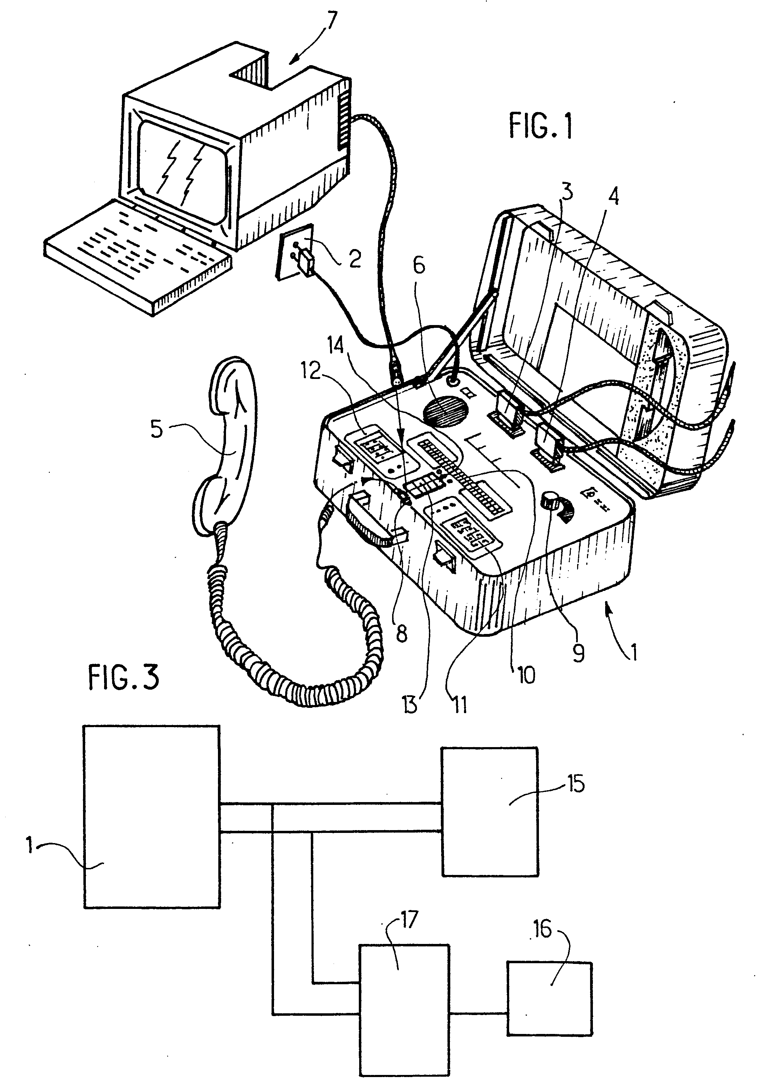

. la figure 1 est une vue générale en perspective du coffret illustrant les possibilités de raccordement en exploitation du simulateur selon l'invention.

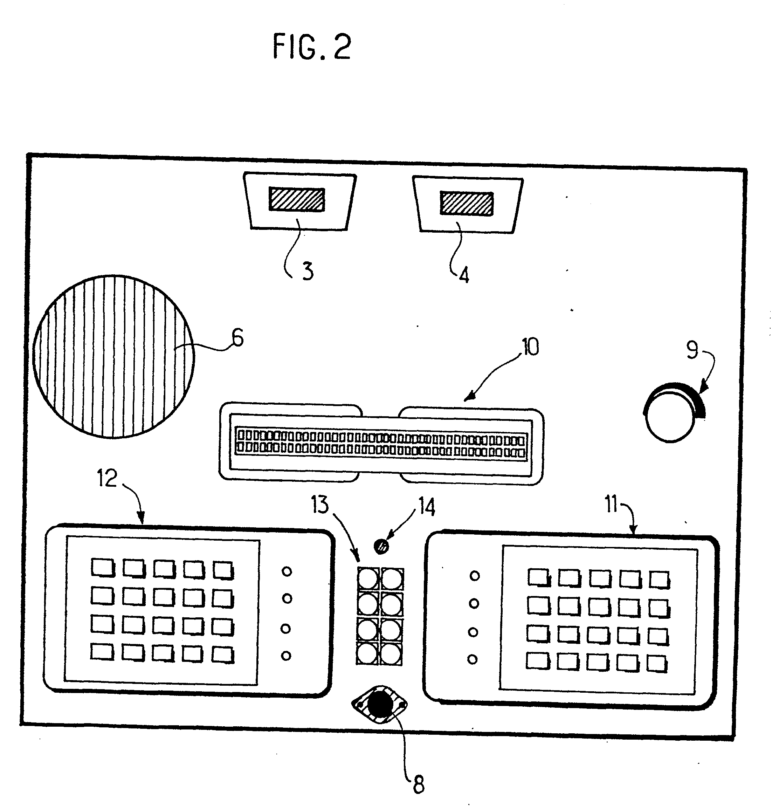

. la figure 2 est une vue en plan de la face avant du simulateur selon l'invention.

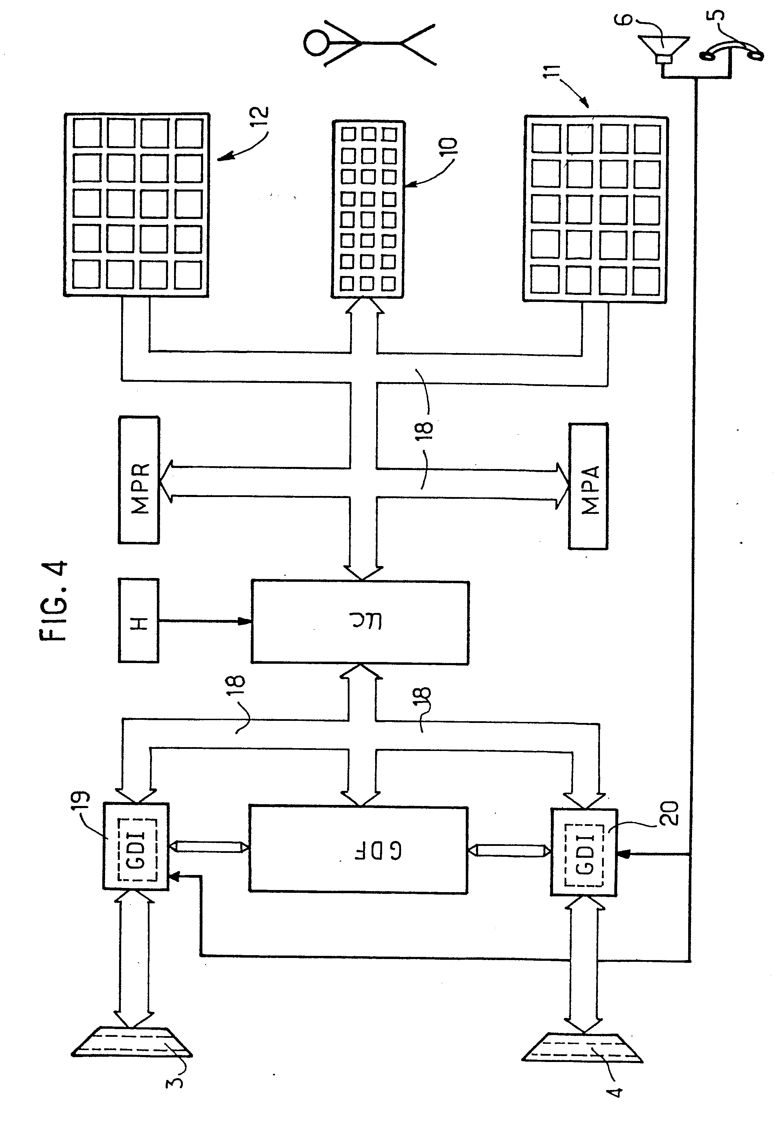

. la figure 3 est le schéma de raccordement à un central analogique et à un central numérique.

. la figure 4 est le schéma général de principe illustrant la constitution globale du simulateur selon l'invention.

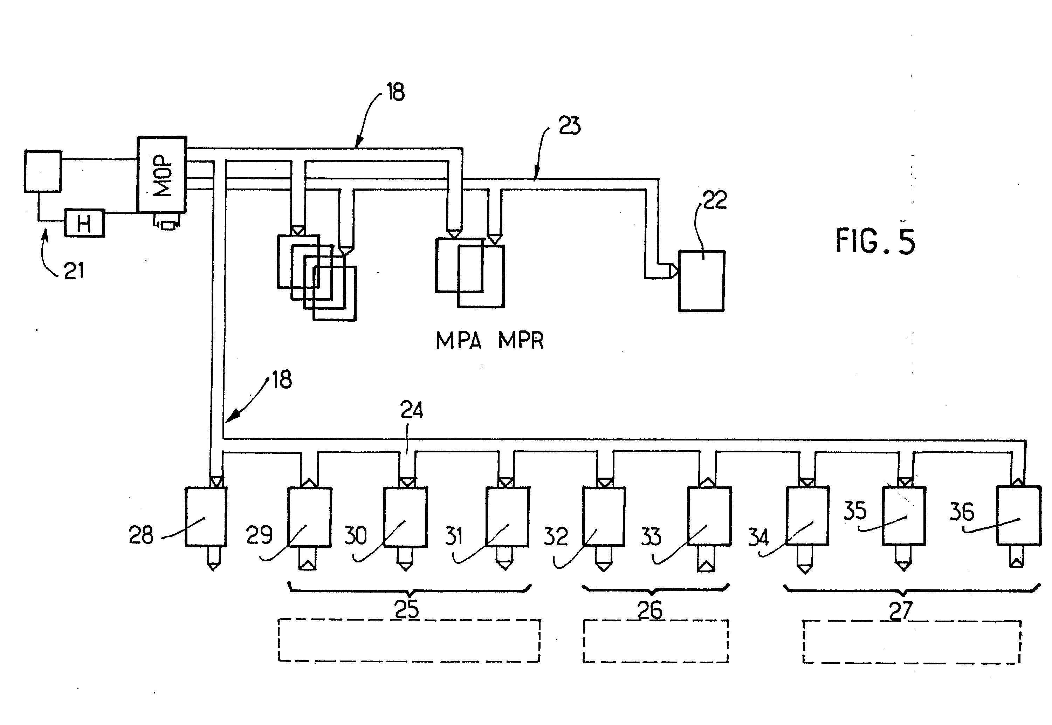

. la figure 5 est le schéma synoptique de l'unité centrale.

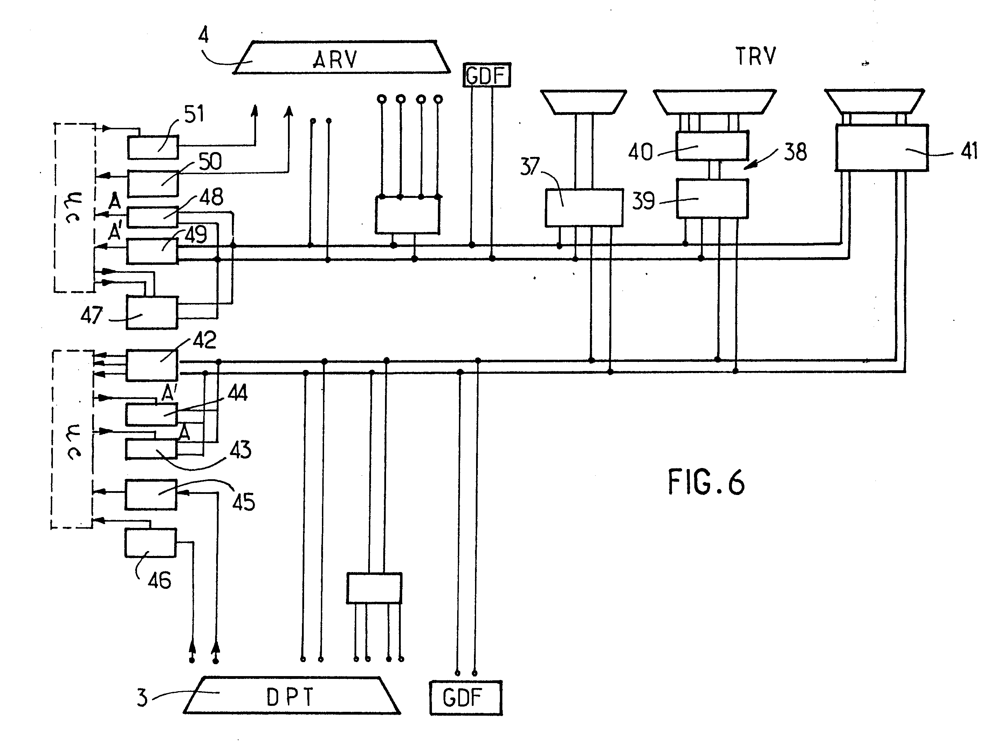

. la figure 6 est le schéma synoptique du générateur-détecteur d'impulsions et d'impédances.

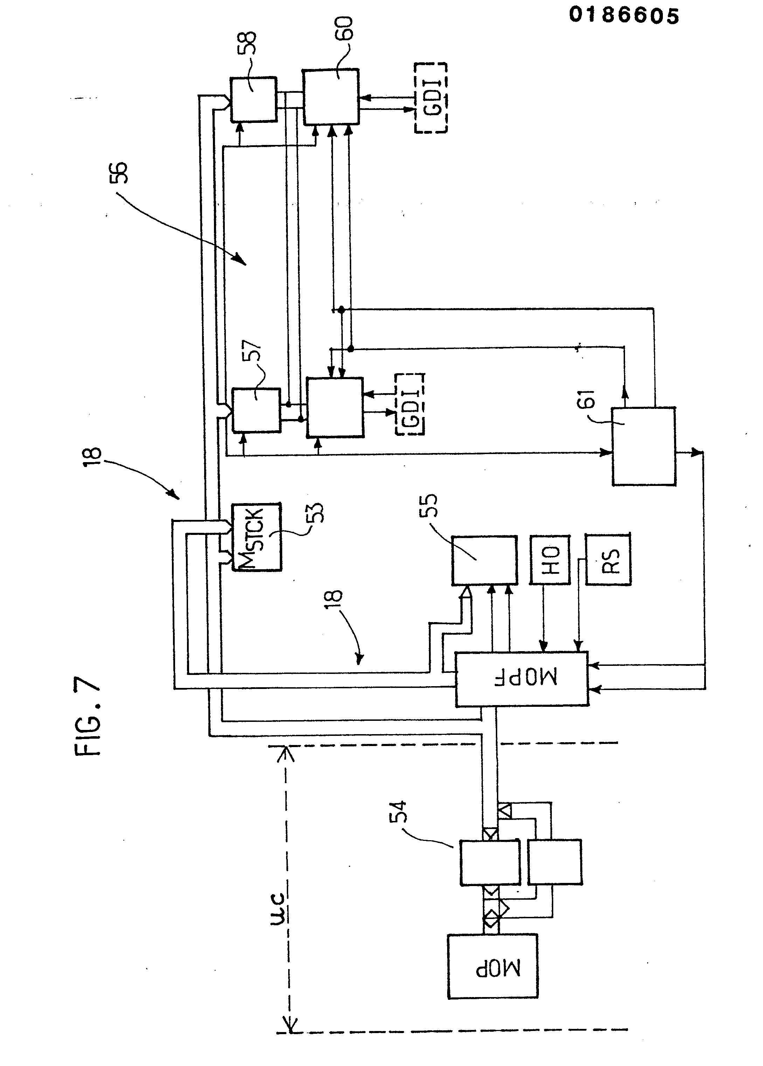

. la figure 7 est le schéma synoptique du générateur-détecteur de fréquences.

On décrira ci-après tout d'abord les caractéristiques techniques générales et fonctions du simulateur selon l'invention telles qu'apparaissant à l'utilisateur en référence aux figures 1 et 2.

On indique également ci-après, à titre d'exemples, tous les types de signalisations couverts par le simulateur selon l'invention:

. MF Socotel à changement d'état (multifréquences)

. MF Socotel à impulsions

. décimales à impulsions pour PABX

. R2

Ces caractéristiques serviront ultérieurement pour la description des circuits et du fonctionnement.

Le simulateur se présente extérieurement sous la forme d'un coffret 1 unique et portable à alimenter par une prise électrique secteur 2 et à relier au central téléphonique par des joncteurs départ 3 et arrivée 4. Des organes d'écoute, combiné 5 et haut-parleur 6 ou de visualisation et de transmission de données numériques par une console 7 sont raccordés à une prise d'écoute et de dialogue 8. L'intensité sonore du haut-parleur est réglable par le bouton 9.

La face avant est complétée par un afficheur alphanumérique central 10 utilisé en émission et en réception. La face avant comporte également deux claviers de commandes par l'opérateur, respectivement clavier arrivée 11 et clavier départ 12 complétés par un groupe de touches lumineuses de configuration 13 et un témoin 14 d'état de ligne. Les touches de configuration 13 sont utilisées pour la sélection du mode de fonctionnnement et des conditions limites.

Le simulateur selon l'invention permet le contrôle des centraux téléphoniques de type analogique 15, mais aussi les centraux numériques 16 grâce à un boîtier unique d'adaptation 17, ainsi qu'il ressort de la figure 3, car il possède déjà l'interface appropriée.

Le schéma fonctionnel global représenté en figure 4 montre la constitution générale du simulateur selon l'invention.

Il se compose d'une unité centrale UC à microprocesseur MOP pilotée de façon classique par une horloge H. Cette unité centrale UC est reliée par un bus 18 à un groupe de mémoires comprenant une mémoire programmes MPR et une mémoire paramètres MPA et aux organes et éléments de communication tels que les claviers de commandes 11 et 12 et l'afficheur central 10 et autres éléments servant aux mêmes fonctions.

L'unité centrale UC est reliée par le même bus 18 aux blocs fonctionnels principaux GDI et GDF assurant la génération et la détection des signaux, fréquences et autres variations de ligne tels qu'un générateur-détecteur d'impulsions, d'impédances et de polarités GDI et un générateur-détecteur de fréquences GDF qui communiquent avec le central raccordé par l'intermédiaire d'interfaces appropriées intégrées au GDI de transmission et de commutation 19 et 20 aboutissant aux prises de jonction de ligne départ 3 et arrivée 4.

Le schéma synoptique de l'unité centrale UC représenté en figure 5 montre le microprocesseur MOP piloté par un circuit d'horloge 21. Il est relié aux mémoires programme MPR et paramètre MPA et à un circuit de décodage pour validation 22 par un bus 23. Il est relié par une autre liaison 24 à travers des bascules appropriées aux groupes suivants de fonctions : premier groupe 25 relatif au générateur-détecteur d'impulsions, d'impédances et de polarités GDI, un deuxième groupe 26 générateur-détecteur de fréquences GDF et un troisième groupe 27 d'affichage et de communication ou gestion face avant. Une liaison électrique directe multifilaire 28 relie l'unité centrale UC à l'afficheur central 10.

Les bascules du groupe GDI peuvent être classées en bascule fonction détection 29, bascule fonction génération 30, bascule fonction commutation 31.

Les bascules du groupe GDF sont les suivantes: bascule de génération 32 et bascule de détection 33.

Le groupe gestion face avant 27 comporte trois bascules : une bascule éclairage touche 34, une bascule fonctionnement afficheur et éclairage LED de libération de ligne 35 et une bascule clavier 36.

On examinera maintenant successivement les schémas généraux de constitution du générateur-détecteur GDI et du générateur-détecteur de fréquence GDF en référence aux figures 6 et 7.

Le générateur-détecteur GDI a pour but de remplir les fonctions essentielles suivantes : génération et détection des polarités, impédances et impulsions et autres variations propres aux signaux de ligne, de réaliser les commutations combiné- haut-parleur, les conversions entre circuits à deux et quatre fils, assurer les fonctions électroniques d'insertion du combiné et du haut-parleur (amplification).

Le schéma synoptique du générateur-détecteur GDl montre d'une part les fonctions générales d'interface, de raccordement et d'adaptation entre les circuits arrivée et départ et les appareils et dispositifs de communication : écran + clavier, combiné, amplification + haut-parleur.

On distingue ainsi un groupe de commande des organes de dialogue et d'écoute référencé TRV comprenant un bloc de commutation 37 avec la console 7 de transmission de données, un ensemble 38 de commande 39 et d'amplification 40 du haut-parleur 5, un module 41 d'adaptation et de commande du combiné. Tous ces ensembles ou modules sont commandés par l'unité centrale UC.

Le joncteur départ 3 est relié à un groupe de fonctions DPT propres aux départs. Il se compose des circuits suivants : détecteur 42 des impédances, générateurs 43 et 44 des signaux A et A', détecteur 45 et générateur 46 d'impulsions sur les circuits TRON et RON.

Le joncteur arrivée 4 est relié à un groupe de fonctions ARV propres aux arrivées. Il se compose des circuits suivants : générateur 47 des impédances, détecteurs 48 et 49 des signaux A et A', détecteur 50 et générateur 51 d'impulsions sur les circuits TRON et RON.

Le schéma synoptique du générateur-détecteur de fréquences GDF représenté en figure 7 montre la structure suivante. Un microprocesseur MOPF assure la génération et la gestion .des fréquences avec l'aide d'une mémoire de stockage MSTCK 53 qui fait partie des unités de mémoire indiquées ci-dessus et sont désservies par le bus 18.

Des circuits d'interface 54 formés de plusieurs bascules assurent la liaison entre le microprocesseur de l'unité centrale MOP et le microprocesseur MOPF du générateur-détecteur de fréquences. Ce dernier commande un décodeur 55 et communique avec le générateur-détecteur GDI et les joncteurs 3 et 4 de départ et d'arrivée par un bloc 56 de conversion numérique/analogique formé de registres départ 57 et arrivée 58 suivies de convertisseurs numériques-analogiques 59 et 60 et commandées par le décodeur 55 en liaison avec un compteur logique 61 relié à MOPF.

Le microprocesseur MOPF comprend classiquement un circuit d'horloge HO de réinitialisation RS.

On examinera maintenant un exemple type de fonctionnement. Il s'agit du test d'un circuit de chaîne d'arrivée sur un central téléphonique analogique courant fonctionnant en circuits deux fils et en mode dit MF impulsions (multifréquences impulsions). On procède tout d'abord au raccordement avec le central en reliant le joncteur arrivée 4 au joncteur à tester de la baie de raccordement du central.

On prépare le menu en adaptant la configuration de l'appareil à celle du central à l'aide des touches du clavier concerné, ici on sélectionne une structure deux fils et mode MF impulsion et chaîne d'arrivée.

On prend la ligne en appuyant sur la touche prise de ligne. Le témoin lumineux 14 s'allume pour indiquer l'état de prise de ligne. Cette opération consiste à envoyer au central un signal de prise de ligne sous la forme d'une impulsion sur le fil RON. La réception du central se traduit par un signal de mélange de fréquences envoyé sur la ligne. Ce signal détecté par GDF provoque l'affichage d'un code. En fonction de son contenu, l'opérateur tapera sur le clavier un autre code et il s'engagera un véritable dialogue qui a pour but de transmettre le numéro d'appel et de fournir les indications sur le demandé.

Il s'ensuit un changement de signaux phase après phase entre le central et le simulateur jusqu'au passage en phase de conversation dans laquelle le témoin lumineux 14 d'état de la ligne clignote.

On examinera maintenant plus particulièrement le cheminement des signaux à l'intérieur de l'appareil entre l'unité centrale et ses périphériques.

Dès l'action sur le clavier, l'unité centrale détecte la demande de programme et s'adresse à la mémoire programme MPR pour sélectionner le programme demandé. Cette action commande l'afficheur en zone émission et la génération d'impulsions correspondant à l'identité de prise puis la connexion du haut parleur et la commande du témoin lumineux de prise. L'unité centrale se met ensuite en attente d'un signal du central. Le signal est reçu et détecté par le microprocesseur MOPF de GDF qui avertit l'unité centrale à travers l'interface. Suivent ensuite les commandes et instructions suivantes :

. transcription du signal physique en un code dans la signalisation considérée.

. commande de l'afficheur dans la zone de réception.

. génération d'une fréquence de contrôle à titre d'accusé de réception.

qui se traduisent selon les séquences suivantes entre les circuits principaux de l'appareil :

. détection d'un signal MF (multifréquences) par GDF

. transmission à MOP des deux fréquences
détectées par GDF

. commande par MOP pour l'affichage d'un code
(ex. A1) en zone émission-départ ainsi que
composition en fréquences en zone commune
(F1 +...)

. commande par MOP de la génération d'une
fréquence de contrôle (ex. Fc) réalisée par
GDF et affichage du code fréquence en zone
commune de l'afficheur.

Après divers échanges de signaux d'enregistreurs (numéro téléphonique du demandé et autres), le correspondant est atteint. Sur réception du signal réponse, s'effectue le passage en conversation et en commande du témoin 14 en clignotement. Après raccrochement, l'opérateur libère et le témoin lumineux s'éteint.

L'invention a été décrite en détail ci-dessus, il est bien entendu toutefois que diverses variantes directes, modifications simples et substitutions par des moyens et matériaux équivalents, adjonctions d'éléments inopérants et autres modifications sans apport inventif entrent pleinement dans son cadre.

REVENDICATIONS

1. Simulateur de trafic téléphonique pour le contrôle la maintenance et la mise au point des centraux caractérisé en ce qu'il comprend une unité centrale UC reliée par un bus unique (18) à un générateur-détecteur d'impulsions, impédances et polarités GDI et à un générateur-détecteur de fréquences GDF en liaison avec des organes périphériques d'affichage, de contrôle lumineux (14) et sonore et de transmission de données et de communication.

2. Simulateur de trafic selon la revendication 1 caractérisé en ce que la génération des fréquences, leur gestion, leur contrôle et leur détection sont assurés par un microprocesseur MOPF dans le générateur-détecteur de fréquences GDF.

3. Simulateur de trafic selon la revendication 1 caractérisé en ce qu'il possède des interfaces sur chaque voie départ ou arrivée avec les générateurs détecteur de fréquence GDF et détecteur d'impulsion GDI.

4. Simulateur de trafic selon la revendication 3 caractérisé en ce que les interfaces sont communes au GDF et au GDI.

5. Simulateur de trafic selon les revendications 1 et 3 caractérisé en ce que GDF est unique pour le départ et l'arrivée.

0186605

FIG.1

FIG.3

0186605

FIG.2

FIG. 4

0186605

0186605

FIG. 5

H · MOP · 21 · 18 · 23 · 22 · MPA MPR · 18 · 24 · 28 · 29 · 30 · 31 · 25 · 32 · 33 · 26 · 34 · 35 · 36 · 27

FIG.6

0186605

FIG.7

6/6

0186605